# FASCICULE DE BREVET EUROPEEN

(11) **EP 0 559 006 B1**
(45) Date de publication et mention de la délivrance du brevet: **10.01.1996**
(21) Numéro de dépôt: 93102500.1
(22) Date de dépôt: 18.02.1993
(51) Int. Cl.: B23D 47/00, B27B 5/34

(54) **Dispositif d'entretoisement pour les lames d'un train de scies et train de scies utilisant un tel dispositif**
Abstandshalter zum Aufspannen einer Mehrzahl von Kreissägeblättern auf einer einzigen Sägespindel und Kreissäge-Aufbau versehen mit diesem Abstandhalter
Spacer for mounting multiple circular saw blades on a single spindle and set of saw blades using the spacer

(30) Priorité: 03.03.1992 FR 9202686
(43) Date de publication de la demande: 08.09.1993
(73) Titulaire: Comadur S.A., 2400 Le Locle (CH)
(72) Inventeur: Rognon, Maurice, F-25500 Morteau (FR)
(74) Mandataire: de Raemy, Jacques

(56) Documents cités:
- EP-A- 0 016 688
- US-A- 1 888 895
- US-A- 2 555 428
- US-A- 4 033 319

## Description

L'invention concerne un dispositif d'entretoisement pour les lames d'un train de scies ainsi qu'un train de scies utilisant un tel dispositif, ledit dispositif et ledit train de scies étant plus particulièrement destinés au sciage simultané d'une pluralité de rondelles à partir de cylindres de matériaux durs; voir par exemple US-A 4 033 319.

Les machines de sciage connues et qui sont destinées plus particulièrement au sciage de rondelles pour la production de glaces pour montre ou analogue comprennent généralement un train de scies formé d'une pluralité de scies circulaires disposées les unes à côté des autres sur un même arbre moteur monté et entraîné à rotation sur un élément du bâti de la machine. Les scies circulaires sont séparées les unes des autres au moyen d'entretoises qui définissent l'épaisseur des rondelles à scier. Ces entretoises sont généralement formées de bagues contre les faces latérales desquelles s'appuient les scies. Ces bagues ont un diamètre relativement faible par rapport au diamètre des scies. La différence entre le rayon des scies et celui des bagues détermine la profondeur maximum de sciage du train de scies de sorte que cette différence doit être choisie aussi grande que possible tout en maintenant un diamètre de l'entretoise suffisant pour qu'elle fournisse les surfaces latérales d'appui nécessaires à un serrage correct des scies sur l'arbre, c'est-à-dire pour que les scies soient maintenues parallèles entre elles.

Ces dispositifs d'entretoisement et par conséquent ces trains de scies ne sont toutefois pas entièrement satisfaisants notamment quand ils sont utilisés pour le découpage de pièces en matériaux durs. En effet, ces trains de scies sont généralement utilisés sur des machines de sciage comprenant un chariot porte-pièces animé d'un mouvement de translation alternatif, alors que le train de scies se déplace avec un mouvement d'avance pas à pas, selon une direction perpendiculaire au déplacement du chariot et à un rythme d'un pas après chaque course du chariot.

Or, on observe, dès la première entrée en contact du train de scies avec les pièces à découper, l'apparition d'un gauchissement des scies qui entraîne, après un grand nombre de passes, une perte de parallélisme sensible dans la coupe, cette perte de parallélisme s'accentuant au cours de la progression du sciage.

Cette déformation au cours du sciage est due, d'une part, à la souplesse des lames qui sont généralement de faible épaisseur et, d'autre part, à l'irrégularité et à la dureté des pièces à découper qui sont souvent à l'état brut.

Il résulte donc de l'utilisation d'un tel train de scies d'importantes dispersions dans l'épaisseur des pièces découpées obtenues, l'occurrence de ces dispersions étant directement proportionnelle au nombre de scies du train de scies. Il est donc nécessaire de prévoir une reprise quasi systématique des pièces découpées par des étapes de semi-finition pour rattraper les dispersions d'épaisseur et mettre ces pièces découpées à une épaisseur uniforme acceptable avant d'éventuelles opérations ultérieures d'usinage et de finition.

Par conséquent, l'utilisation d'un tel train de scies engendre un coût élevé de fabrication global des pièces découpées, coût qu'il est souhaitable de réduire notamment dans le cas où le train de scies est utilisé pour découper des rondelles à partir de cylindres de saphir pour la fabrication de glaces de montre, le prix de ces cylindres en saphir intervenant pour près de 40% dans le prix total de la glace finie.

L'invention a donc pour but principal de remédier aux inconvénients de l'art antérieur susmentionné en fournissant un dispositif d'entretoisement pour lames de scies d'un train de scies ainsi qu'un train de scies équipé d'un tel dispositif qui permettent un sciage précis d'une pluralité de tranches de façon simultanée à partir de pièces en matériau dur, tels que des cylindres de saphir, de sorte que ces tranches nécessitent un minimum d'opérations de reprise avant d'atteindre leur état de pièce finie.

A cet effet, l'invention a pour objet un dispositif d'entretoisement de lames d'un train de scies comportant au moins deux scies solidaires d'un arbre d'entraînement, caractérisé en ce qu'il comprend une bague à partir de la périphérie de laquelle s'étendent une pluralité de languettes ayant une élasticité transversale inhérente, ladite bague étant destinée à être disposée entre lesdites lames de scies.

On comprend donc aisément qu'une fois les dispositifs d'entretoisement selon l'invention montés sur un train de scies, les languettes, qui s'étendent à partir de la bague, entre les faces en regard des scies voisines, empêchent le fléchissement des scies au cours du sciage tout en se déformant progressivement lorsqu'elles entrent en contact avec les pièces à découper et en reprenant leur forme initiale par la suite en raison de leur élasticité inhérente, de sorte que le sciage n'est aucunement perturbé. Il en résulte que la distance entre les scies est maintenue constante par les languettes tout au long du sciage et que la dispersion dans les épaisseurs des pièces découpées est fortement diminuée voire même éliminée.

Selon un premier mode de réalisation de l'invention, les languettes s'étendent radialement à partir de la périphérie de la bague.

Selon un deuxième mode de réalisation de l'invention, les languettes s'étendent sensiblement tangentiellement à partir de la périphérie de la bague.

Selon une caractéristique avantageuse de l'invention, les languettes sont réparties régulièrement autour de la bague.

Grâce à cette caractéristique, on évite un éventuel déséquilibre pouvant créer un effet de balourd nuisible à l'équilibre dynamique du train de scies.

L'invention a également pour objet un train de scies comportant au moins deux scies disposées sur un arbre d'entraînement et rendues solidaires de ce dernier par des moyens de blocage, caractérisé en ce que les scies sont séparées les unes des autres par un dispositif d'entretoisement comprenant une bague à partir de laquelle s'étendent une pluralité de languettes ayant une élasticité transversale inhérente, ladite bague étant solidaire dudit arbre à l'aide desdits moyens de blocage.

D'autres caractéristiques et avantages de l'invention apparaîtront à la lecture de la description qui suit de modes de réalisation de l'invention donnés à titre illustratif et non limitatif, en liaison avec les dessins joints parmi lesquels :
- la figure 1 montre un train de scies équipé de dispositifs d'entretoisement selon l'invention et monté sur une machine de sciage classique;
- la figure 2 est une vue en perspective éclatée d'un train de scies équipé de dispositifs d'entretoisement selon un premier mode de réalisation de l'invention;
- les figures 3 et 4 montrent respectivement une vue de face et une vue de côté d'un premier mode de réalisation d'un dispositif d'entretoisement selon l'invention;
- la figure 5 montre une vue de face d'un deuxième mode de réalisation d'un dispositif d'entretoisement selon l'invention;
- les figures 6 et 7 montrent respectivement le comportement du premier et du deuxième mode de réalisation d'un dispositif d'entretoisement selon l'invention lors d'une opération de sciage de rondelles à partir de cylindres de saphir; et
- la figure 8 montre une vue de dessus d'un train de scies selon la figure 6.

La description détaillée de l'invention qui va suivre va être faite dans le cadre d'un train de scies destiné au sciage de cylindres de saphir en vue d'obtenir des rondelles pour former des glaces de montre.

Bien entendu, l'invention n'est pas limitée à une telle application et au mode de réalisation qui sera décrit. Par exemple, l'invention peut être utilisée avec tout autre train de scies destiné à découper des pièces d'épaisseur déterminée et le dispositif d'entretoisement selon l'invention sera particulièrement approprié dans le cas de l'utilisation de scies présentant une faible résistance au fléchissement.

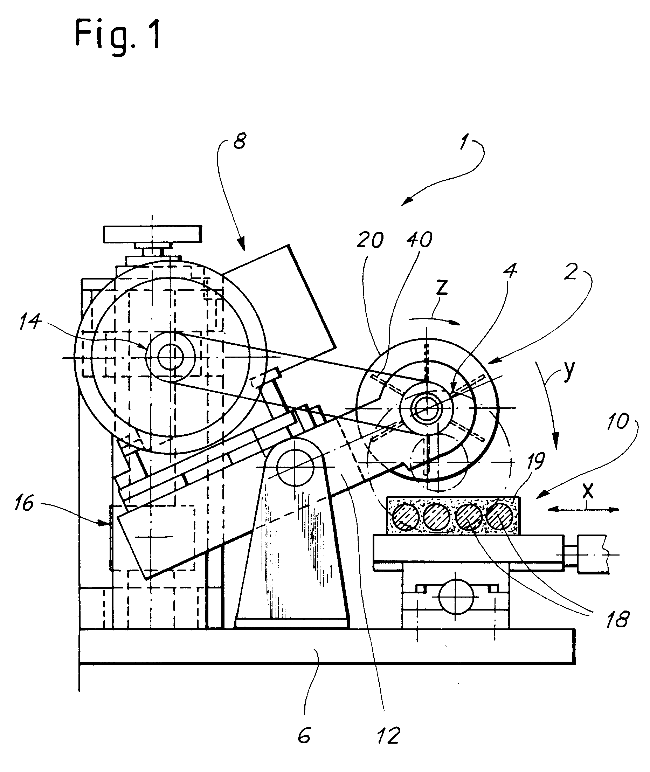

En se référant tout d'abord à la figure 1, on voit une représentation schématique d'une machine de sciage désignée par la référence numérique générale 1 équipée d'un train de scies circulaires 2 selon l'invention. Par un tel train de scies on entend un train de scies muni d'une pluralité de dispositifs d'entretoisement 4 selon l'invention lesquels seront décrits plus en détail ci-après et dont seulement un est représenté en pointillé à la figure 1.

La machine 1 comprend généralement un bâti 6 équipé d'une unité de sciage 8 et d'un dispositif porte-pièces formé d'un chariot 10. L'unité de sciage 8 comprend le train de scies 2, ainsi des moyens de support 12, des moyens d'entraînement 14 et des moyens d'avance 16 de ce train de scies 2.

Ces moyens 12, 14, et 16 ne seront pas décrits ici plus en détail car ils n'ont pas de lien particulier avec l'invention et font partie des connaissances générales de l'homme du métier.

Dans l'exemple représenté, le chariot 10 qui porte des pièces à découper 18 noyées dans une résine est animé d'un mouvement de translation alternatif parallèle à la surface du bâti 6 et symbolisé par la flèche double X, alors que l'unité de sciage 8 est animée d'un mouvement d'avance pas à pas selon une direction sensiblement perpendiculaire au déplacement du chariot 10 symbolisé par la flèche Y et à un rythme d'un pas après chaque course du chariot 40. Les scies du train de scies 2 tourne dans le sens indiqué par la flèche Z

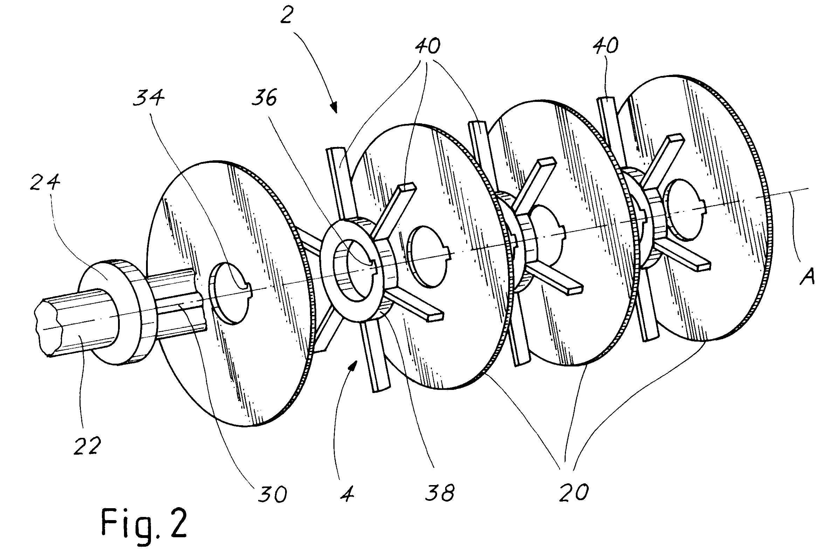

En se référant plus particulièrement à la figure 2, on voit une représentation en perspective éclatée du train de scies 2 selon un premier mode de réalisation de l'invention.

Ce train de scies 2 comprend une pluralité de scies circulaires 20 montées sur un arbre d'entraînement 22 tournant autour d'un axe géométrique désigné par A au dessin. Selon l'invention, ces scies 20 sont séparées les unes des autres par des dispositifs d'entretoisement 4 dont la dimension selon l'axe A définit l'épaisseur des pièces à découper.

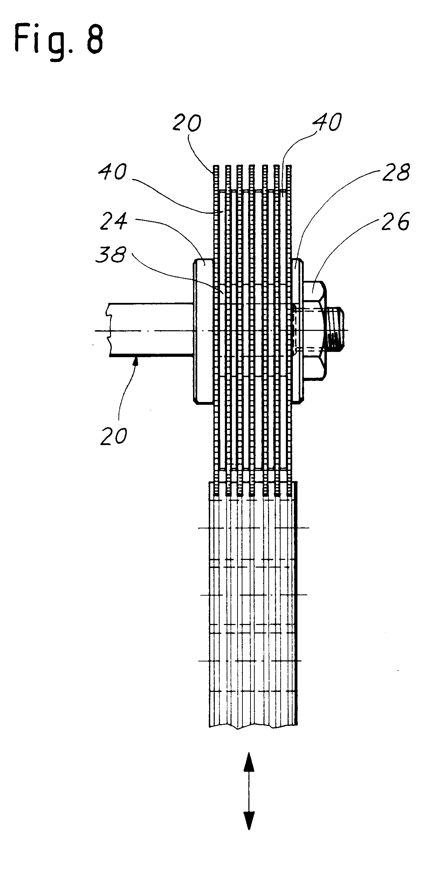

Les scies 20 et les dispositifs d'entretoisement 4 sont maintenus serrés, de façon classique, contre un épaulement 24 ménagé sur l'arbre 22, par exemple au moyen d'un écrou 26 et d'une rondelle 28 vissés sur une portion filetée de l'arbre 22 (figure 8).

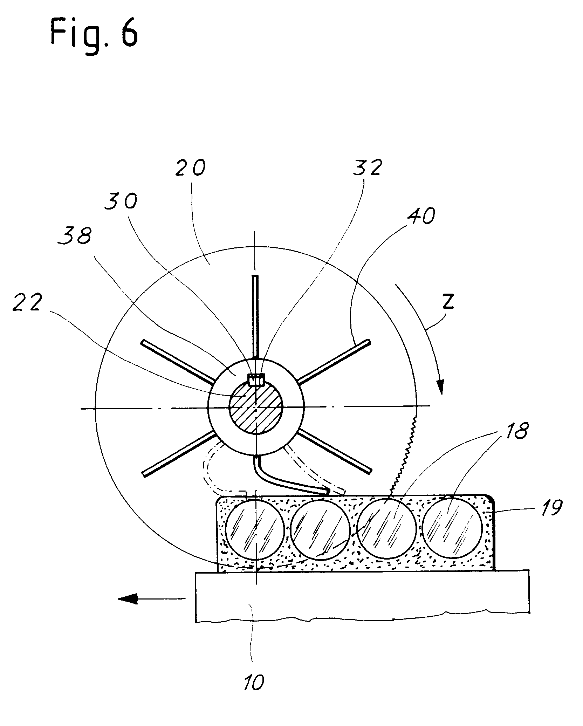

Les scies 20 et les dispositifs d'entretoisement 4 sont rendus solidaires de l'arbre 22 de façon classique par des moyens de blocage, par exemple au moyen d'une clavette 30 qui, d'une part, s'étend dans une rainure 32 (figure 6) ménagée sur toute la longueur de l'arbre 22 et qui, d'autre part, coopère avec des encoches 34, 36 correspondantes ménagées respectivement dans les scies 20 et dans les dispositifs d'entretoisement 4.

Il va de soi que tout autre moyen de blocage des scies 20 et des dispositifs d'entretoisement 4 sur l'arbre 22 peut être envisagé. A titre d'exemple, le blocage des scies 20 et des dispositifs 4 sur l'arbre 22 peut être réalisé par la simple pression des scies 20 et des dispositifs 4 les uns contre les autres appliquée par le serrage de l'écrou 26.

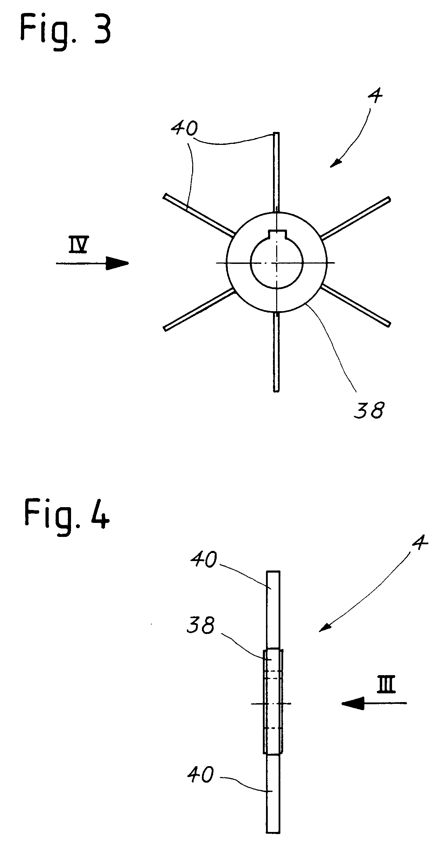

Comme cela ressort également des figures 3 et 4 et selon le premier mode de réalisation de l'invention, les dispositifs d'entretoisement 4 sont formés chacun d'une bague 38 à partir de laquelle s'étendent radialement une pluralité de languettes 40.

Ces languettes 40 présentent, selon une caractéristique importante de l'invention, une élasticité transversale inhérente. En d'autres termes, ces languettes 40 peuvent aisément fléchir dans un plan perpendiculaire à l'axe A sous l'action d'une contrainte exercée sur leur extrémité et reprendre leur forme initiale dès que l'application de cette contrainte a cessé.

Avantageusement, et comme cela ressort particulièrement de la figure 4, la dimension axiale de la bague 38 est légèrement supérieure à la dimension axiale des languettes 40, cette différence étant répartie de manière sensiblement égale de part et d'autre des languettes 40. De préférence, la dimension axiale des bagues 38 est supérieure de quelques centièmes de mm à la dimension axiale des languettes 40. On garantit ainsi une bonne liberté de flexion des languettes 40 lorsque les dispositifs d'entretoisement 4 sont disposés et serrés entre les scies 20. A ce propos, une différence de deux centièmes de mm est tout à fait appropriée.

Selon une autre caractéristique avantageuse de l'invention, les languettes 40 présentent une section droite rectangulaire, le grand côté de cette section s'étendant selon l'axe A. Cette structure confère aux languettes 40 une certaine rigidité dans un plan parallèle à l'axe A tout en leur conférant une flexibilité dans la direction de déformation privilégiée désirée, à savoir dans un plan perpendiculaire à l'axe A. Une efficacité maximum du dispositif peut être ainsi obtenue.

Il est bien entendu que selon des variantes de réalisation de l'invention, la section droite des languettes 40 peut présenter d'autres formes comme par exemple une forme circulaire ou carrée.

On voit également à la figure 3 que les languettes 40 sont réparties régulièrement à la périphérie de la bague 38 de sorte que l'on obtient un bon équilibre dynamique du dispositif d'entretoisement 4 lorsque celui-ci est monté sur l'arbre 22.

La longueur des languettes 40 varie en fonction du diamètre des scies avec lesquelles le dispositif 4 selon l'invention est utilisé, mais pour obtenir une efficacité optimale, les languettes doivent être suffisamment longues pour s'étendre à peu prés jusqu'au bord de coupe des scies 20.

Dans le mode de réalisation décrit, les languettes 40 ne forment qu'une pièces avec la bague 38, cette pièce étant réalisée de préférence en un matériau synthétique présentant un faible coefficient de frottement.

A titre d'exemple, les matériaux synthétiques que l'on peut injecter, tels que le polyéthylène ou des polymères fluorés tels que le polytétrafluoroéthylène, ou des matériaux présentant des propriétés mécaniques analogues, sont particulièrement appropriés.

Selon une variante non représentée, on peut prévoir une bague 38 à la périphérie de laquelle on rapporte les languettes 40. Dans ce cas, la bague 38 peut être réalisée en métal et comporter des rainures en T dans lesquelles des languettes 40 en matériau synthétique tel que l'un de ceux cités plus haut, présentant une base de forme correspondant aux rainures sont glissées. Une telle variante présente notamment l'avantage de permettre de changer aisément les languettes 40 dès qu'elles présentent des signes d'usure.

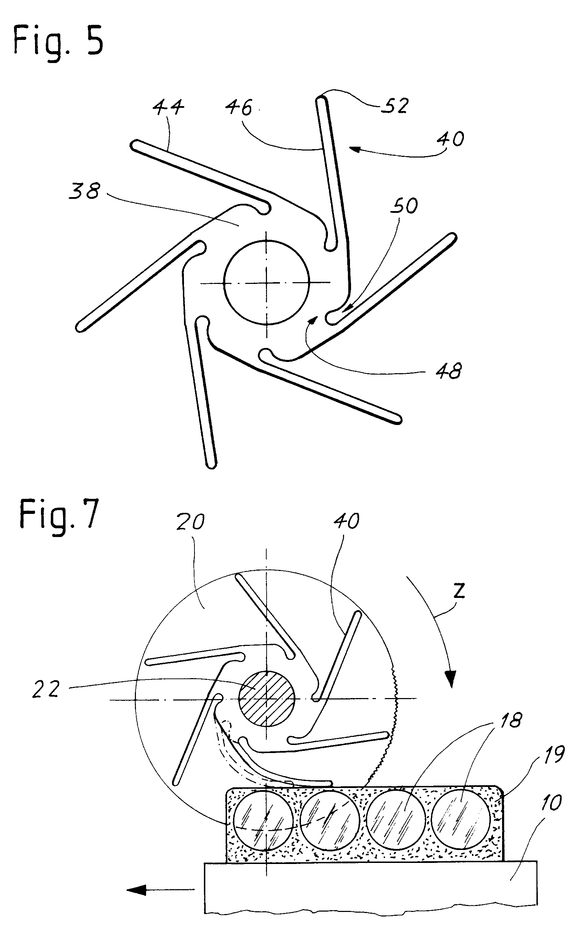

En se référant maintenant à la figure 5, on a représenté un deuxième mode de réalisation d'un dispositif d'entretoisement 4 selon l'invention dans lequel on a désigné les éléments identiques à ceux décrits précédemment par les mêmes références numériques.

A la différence du premier mode de réalisation, les languettes 40 du deuxième mode de réalisation s'étendent tangentiellement à partir de la périphérie de la bague 38. Chaque languette 40 présente une face antérieure 44 et une face postérieure 46, la face antérieure 44 d'une languette étant reliée à la face postérieure 46 de la languette voisine par une zone de liaison 48. La zone de liaison 48 présente la configuration d'une rainure oblongue 50 débouchant en direction de l'extrémité libre 52 des languettes 40.

Aux figures 6 et 7, on a représenté en pointillé la position des languettes 40 à différents stades de la rotation du dispositif d'entretoisement par rapport aux pièces à découper. On remarque que les languettes 40 se déforment progressivement lorsqu'elles arrivent en contact avec les pièces à découper 18 et reprennent ensuite leur forme initiale après qu'elles ont cessé d'être en contact avec ces pièces à découper 18 grâce à leur élasticité inhérente.

Dans toutes les formes d'exécution, les languettes 40 qui s'étendent entre les scies empêchent le fléchissement des scies au cours du sciage. La distance entre les scies 20 est ainsi maintenue constante. Il en résulte donc un diminution considérable de la dispersion dans les épaisseurs des pièces découpées.

On notera que la structure tangentielle des languettes du dispositif 4 représenté à la figure 7 facilite, d'une part, l'effacement de celles-ci lorsqu'elles arrivent en contact avec les pièces à découper et, d'autre part, autorise une profondeur de sciage plus grande qu'avec les languettes radiales, et cela en diminuant l'usure et le risque de rupture dûs à une flexion trop importante des languettes.

Il va de soi que les languettes du dispositif représenté aux figures 5 et 7 ont une orientation telle qu'elles présentent un sens de montage qui dépend du sens de rotation des scies.

## Revendications

1. Dispositif d'entretoisement (4) de lames d'un train de scies (20) comportant au moins deux scies solidaires d'un arbre d'entraînement (22), caractérisé en ce qu'il comprend une bague (38) à partir de la périphérie de laquelle s'étendent une pluralité de languettes (40) ayant une élasticité transversale inhérente, ladite bague (38) étant destinée à être disposée entre lesdites lames de scies.

2. Dispositif d'entretoisement selon la revendication 1, caractérisé en ce que les languettes (40) s'étendent radialement à partir de la périphérie de la bague (38).

3. Dispositif d'entretoisement selon la revendication 1, caractérisé en ce que les languettes (40) s'étendent sensiblement tangentiellement à partir de la périphérie de la bague (38).

4. Dispositif d'entretoisement selon la revendication 3, caractérisé en ce que chaque languette (40) présente une face antérieure (44) et une face postérieure (46), la face antérieure (44) d'une languette étant reliée à la face postérieure (46) de la languette voisine par une zone de liaison (48) et en ce que la zone de liaison (48) présente la configuration d'une rainure (50) oblongue débouchant en direction de l'extrémité libre (52) des languettes.

5. Dispositif d'entretoisement selon l'une des revendications 1 à 4, caractérisé en ce que les languettes (40) sont régulièrement réparties autour de la périphérie de la bague (38).

6. Dispositif d'entretoisement selon l'une des revendications 1 à 5, caractérisé en ce que la dimension axiale de la bague (38) est sensiblement égale ou supérieure à la dimension axiale des languettes (40).

7. Dispositif d'entretoisement selon l'une des revendications 1 à 6, caractérisé en ce que les languettes (40) présentent une section droite rectangulaire.

8. Dispositif d'entretoisement selon l'une des revendications précédentes, caractérisé en ce que les languettes (40) sont réalisées en un matériau qui présente un faible coefficient de frottement.

9. Dispositif d'entretoisement selon l'une des revendications précédentes, caractérisé en ce que les languettes (40) viennent de matière avec la bague (38).

10. Dispositif d'entretoisement selon l'une des revendications précédentes, caractérisé en ce que la bague (38) et les languettes (40) sont réalisées en un matériau synthétique.

11. Dispositif d'entretoisement selon la revendication 10, caractérisé en ce que le matériau fait partie de la famille des polymères fluorés.

12. Train de scies comportant au moins deux scies (20) disposées sur un même arbre d'entraînement (22) et rendues solidaires de ce dernier par des moyens de blocage (30), caractérisé en ce que les scies (20) sont séparées les unes des autres par un dispositif d'entretoisement (4) défini selon l'une quelconque des revendications 1 à 11.

13. Train de scies selon la revendication 12, caractérisé en ce que les scies (20) s'étendent radialement au delà des languettes (40).

14. Train de scies selon la revendication 12 ou 13, caractérisé en ce que les scies (20) prennent appui sur les surfaces latérales de la bague (38) du dispositif d'entretoisement (4).

15. Train de scies selon l'une des revendications 10 à 12, caractérisé en ce que les scies (20) et les dispositifs d'entretoisement (4) sont rendus solidaires de l'arbre d'entraînement (22) à l'aide d'un même moyen de blocage (30).

16. Train de scies selon la revendication 15, caractérisé en ce que les moyens blocage (30) sont formés d'un système à clavette.

## Claims

1. Bracing device (4) for the blades of a saw mill (20) having at least two saws solid with a drive shaft (22), characterized in that it comprises a ring (38) from the periphery of which a plurality of tongues (40) extend having an inherent transverse resilience, said ring (38) being designed to be disposed between said saw blades.

2. Bracing device according to claim 1, characterized in that the tongues (40) extend radially from the periphery of the ring (38).

3. Bracing device according to claim 1, characterized in that the tongues (40) extend substantially tangentially from the periphery of the ring (38).

4. Bracing device according to claim 3, characterized in that each tongue (40) has an anterior face (44) and a posterior face (46), the anterior face (44) of one tongue being connected to the posterior face (46) of the neighbouring tongue by a connecting zone (48) and in that the connecting zone (48) has the configuration of an oblong groove (50) opening in the direction of the free extremity (52) of the tongues.

5. Bracing device according to one of claims 1 to 4, characterized in that the tongues (40) are regularly distributed about the periphery of the ring (38).

6. Bracing device according to one of claims 1 to 5, characterized in that the axial dimension of the ring (38) is substantially equal to or greater than the axial dimension of the tongues (40).

7. Bracing device according to one of claims 1 to 6, characterized in that the tongues (40) are of rectangular cross section.

8. Bracing device according to one of the preceding claims, characterized in that the tongues (40) are made of a material which has a low coefficient of friction.

9. Bracing device according to one of the preceding claims, characterized in that the tongues (40) are of the same material as the ring (38).

10. Bracing device according to one of the preceding claims, characterized in that the ring (38) and the tongues (40) are made of synthetic material.

11. Bracing device according to claim 10, characterized in that the material is a fluorinated polymer

12. Saw mill having at least two saws (20) disposed on the same drive shaft (22) and rendered solid with the latter by locking means (30), characterized in that the saws (20) are separated from one another by bracing means (4) defined according to any one of claims 1 to 11.

13. Saw mill according to claim 12, characterized in that the saws (20) extend radially beyond the tongues (40).

14. Saw mill according to claim 12 or 13, characterized in that the saws (20) abut against the lateral surfaces of the ring (38) of the bracing device (4).

15. Saw mill according to one of claims 10 to 12, characterized in that the saws (20) and the bracing devices (4) are rendered solid with the drive shaft (22) by the same locking means (30).

16. Saw mill according to claim 15, characterized in that the locking means (30) are shaped by a system of pegs.

## Patentansprüche

1. Distanziervorrichtung (4) der Blätter einer Folge von Sägen (20), umfassend mindestens zwei Sägeblätter, die mit einer Antriebswelle (22) verbunden sind, dadurch gekennzeichnet, daß sie einen Ring (38) umfaßt, ausgehend von dessen Peripherie sich eine Mehrzahl von Zungen (40) mit einer inhärenten Querelastizität erstreckt, welcher Ring (38) dazu bestimmt ist, zwischen den Sägeblättern angeordnet zu werden.

2. Distanziervorrichtung nach Anspruch 1, dadurch gekennzeichnet, daß die Zungen (40) sich radial ausgehend von der Peripherie des Ringes (38) erstrecken.

3. Distanziervorrichtung nach Anspruch 1, dadurch gekennzeichnet, daß die Zungen (40) sich im wesentlichen tangentiell ausgehend von der Peripherie des Ringes (38) erstrecken.

4. Distanziervorrichtung nach Anspruch 3, dadurch gekennzeichnet, daß jede Zunge (40) eine Vorderseite (44) und eine Rückseite (46) aufweist, wobei die Vorderseite (44) einer Zunge mit der Rückseite (46) der benachbarten Zunge über eine Verbindungszone (48) verbunden ist und daß die Verbindungszone (48) die Konfiguration einer langgestreckten Nut (50) aufweist, die in Richtung des freien Endes (52) der Zungen mündet.

5. Distanziervorrichtung nach einem der Ansprüche 1 bis 4, dadurch gekennzeichnet, daß die Zungen (40) gleichförmig um die Peripherie des Ringes (38) verteilt sind.

6. Distanziervorrichtung nach einem der Ansprüche 1 bis 5, dadurch gekennzeichnet, daß die Axialabmessung des Ringes (38) im wesentlichen gleich oder größer ist als die Axialabmessung der Zungen (40).

7. Distanziervorrichtung nach einem der Ansprüche 1 bis 6, dadurch gekennzeichnet, daß die Zungen (40) einen rechteckigen Querschnitt aufweisen.

8. Distanziervorrichtung nach einem der vorangehenden Ansprüche, dadurch gekennzeichnet, daß die Zungen (40) aus einem Material hergestellt sind, daß einen niedrigen Reibungskoeffizienten aufweist.

9. Distanziervorrichtung nach einem der vorangehenden Ansprüche, dadurch gekennzeichnet, daß die Zungen (40) einstückig mit dem Ring (38) hergestellt sind.

10. Distanziervorrichtung nach einem der vorangehenden Ansprüche, dadurch gekennzeichnet, daß der Ring (38) und die Zungen (40) aus einem synthetischen Material hergestellt sind.

11. Distanziervorrichtung nach Anspruch 10, dadurch gekennzeichnet, daß das Material zu der Familie der fluorierten Polymere gehört.

12. Sägenbaugruppe, umfassend mindestens zwei Sägen (20), die auf einer gemeinsamen Antriebswelle (22) und mit dieser letzteren mittels Blockiermitteln (30) verbunden sind, dadurch gekennzeichnet, daß die Sägen (20) voneinander durch eine Distanziervorrichtung (4) nach einem der Ansprüche 1 bis 11 getrennt sind.

13. Sägenbaugruppe nach Anspruch 12, dadurch gekennzeichnet, daß die Sägen (20) sich radial über die Zungen (40) hinaus erstrecken.

14. Sägenbaugruppe nach Anspruch 12 oder 13, dadurch gekennzeichnet, daß die Sägen (20) an den seitlichen Oberflächen des Ringes (38) der Distanziervorrichtung (4) anliegen.

15. Sägenbaugruppe nach einem der Ansprüche 10 bis 12, dadurch gekennzeichnet, daß die Sägen (20) und die Distanziervorrichtungen (4) mit der Antriebswelle (22) mit Hilfe ein- und desselben Blockiermittels (30) verbunden sind.

16. Sägenbaugruppe nach Anspruch 15, dadurch gekennzeichnet, daß die Blockiermittel (30) von einem Nutfedersystem gebildet sind.
